# EUROPÄISCHE PATENTSCHRIFT

(11) **EP 2 563 860 B1**
(45) Veröffentlichungstag und Bekanntmachung des Hinweises auf die Patenterteilung: **18.06.2014**
(21) Anmeldenummer: 11716401.2
(22) Anmeldetag: 20.04.2011
(51) Int. Cl.: C08L 81/02, B29C 49/00, C08G 65/26, C08G 18/48

(54) **VERFAHREN ZUR HERSTELLUNG VON POLYETHERALKOHOLEN**
METHOD FOR PRODUCING POLYETHER ALCOHOLS
PROCÉDÉ DE PRODUCTION DE POLYÉTHER-ALCOOLS

(30) Priorität: 26.04.2010 EP 10161041
(43) Veröffentlichungstag der Anmeldung: 06.03.2013
(73) Patentinhaber: BASF SE, 67056 Ludwigshafen (DE)
(72) Erfinder: ZARBAKHSH, Sirus, Honk Kong (CN); SCHÜTTE, Markus, 49080 Osnabrück (DE); FRICKE, Marc, 49090 Osnabrück (DE)
(86) Internationale Anmeldenummer: PCT/EP2011/056338
(87) Internationale Veröffentlichungsnummer: WO 2011/134866

(56) Entgegenhaltungen:
- EP-A2- 0 395 316
- WO-A1-2005/044889
- US-A- 4 391 728
- US-A- 5 030 758
- US-A- 5 141 968

## Beschreibung

Gegenstand der Erfindung ist ein Verfahren zur Herstellung von Polyetheralkoholen durch Anlagerung von Alkylenoxiden an H-funktionelle Startsubstanzen, insbesondere an aromatische Amine.

Polyetheralkohole auf Basis von aromatischen Aminen, insbesondere von Methylendianilin (MDA), das zumeist im Gemische mit seinen höherkernigen Kondensationsprodukten vorliegt (p-MDA), und von Toluylendiamin (TDA), und deren Verwendung zur Herstellung von Polyurethanen (PU) ist schon lange bekannt. Die Anwendung dieser Produkte erfolgt hauptsächlich zur Herstellung von Polyurethan-Hartschaumstoffen.

Die Herstellung dieser Produkte erfolgt üblicherweise durch Umsetzung der aromatischen Amine mit Alkylenoxiden, insbesondere von Ethylenoxid und/oder Propylenoxid, zumeist in Anwesenheit eines Katalysators.

US4209609 beschreibt die Herstellung von TDA Polyolen im Hydroxylzahlbereich von 400-630 mgKOH/g, die in der Weise hergestellt werden, dass TDA zuerst mit ca. 4 mol Ethylenoxid und anschließend mit Propylenoxid umgesetzt wird. Diese TDA Polyole zeigen einige Vorteile (z.B. niedrige Wärmeleitzahl). Weiter Herstellverfahren sind beschrieben in DE4232970A1 und US4562290. Die aminkatalysierte Herstellung von TDA Polyolen, welche zuerst mit 2-5 mol Ethylenoxid und dann mit Propylenoxid versetzt werden, ist in EP0318784B1 und DE3740634 beschrieben.

Bei den beschriebenen Polyetheralkoholen ist immer Ethylenoxid in der Polyetherkette enthalten. Dies führt zu einer erwünschten niedrigen Viskosität der Polyetheralkohole. Andererseits führt die Gegenwart von Ethylenoxid in der Polyetherkette zu einer schlechteren Verträglichkeit mit den Treibmitteln, insbesondere bei Einsatz von Kohlenwasserstoffen als Treibmittel.

Reine Propylenoxidpolyether im oben genannten Bereich von Hydroxylzahlen sind, wie beschrieben, sehr hochviskos. Häufig liegt die Viskosität in einem Bereich von >55000 mPas bei 25°C. Dies ist beispielsweise beschrieben in EP0318784 und in WO2005/044889. Polyetheralkohole mit einer derart hohen Viskosität sind ungünstig für die Verarbeitung in PU-Systemen. Zum einen sind hohe Drücke notwendig, um diese Polyole zu pumpen. Dadurch werden die Maschinen in Mitleidenschaft gezogen. Zum anderen verschlechtern die Polyole mit hohen Viskositäten die Fließfähigkeit des Polyurethansystems.

US4391728 beschreibt die Herstellung von niederviskosen TDA Polyolen mittels KOH Katalyse und bei Temperaturen über 140°C. Als Alkylenoxid wird ausschließlich Propylenoxid eingesetzt. Für die Umsetzung sind mindestens 0,8% Alkalimetallhydroxid als Katalysator notwendig. Durch den Einsatz von Alkalimetallhydroxiden als Katalysator ist eine aufwendige Aufarbeitung, wie zum Beispiel Neutralisation und anschließende Filtration, notwendig, insbesondere bei derart hohen Gehalten an Katalysator.

DE 2017038 beschreibt ein Verfahren zur Herstellung von Polyetheralkoholen auf Basis von ortho-TDA und Propylenoxid, bei dem Kaliumhydroxid als Katalysator eingesetzt wird. Die nach diesem Verfahren hergestellten Polyetheralkohole weisen sehr hohe Viskositäten auf. So werden in Beispiel 1 Polyetheralkohole auf Basis von TDA mit einer Hydroxylzahl von 435 mgKOH/g und einer Viskosität von 59500 mPas bei 25°C beschrieben. Dabei wurde am Reaktionsstart jeweils nur eine geringe Menge am Alkylenoxid in Abwesenheit eines Katalysators angelagert (maximal 1,3 mol Alkylenoxid pro Mol TDA). Die Viskosität kann prinzipiell durch den Einsatz hoher Anteile an Co-Startern, beispielsweise Triethanolamin, gesenkt werden. Derartige Polyole sind jedoch nicht für alle Anwendungen, insbesondere auf dem Gebiet der Polyurethan-Hartschaumstoffe, einsetzbar. Insbesondere durch die niedrigere Funktionalität und den geringeren Gehalt an aromatischen Anteilen im Polyetheralkohol treten viele der Vorteile, die mit dem Einsatz der von Polyetheralkoholen auf Basis aromatischer Amine verbunden sind, nicht oder nur in zu geringem Maße auf.

Es war die Aufgabe der vorliegenden Erfindung, Polyetheralkohole auf Basis von aromatischen Aminen, insbesondere von TDA, zu entwickeln, bei deren Herstellung im wesentlichen ausschließlich Propylenoxid als Alkylenoxid eingesetzt wird, und bei denen die Nachteile des Standes der Technik nicht auftreten. Insbesondere sollten diese Polyetheralkohole eine niedrige Viskosität und einen geringen Gehalt an nicht umgesetzten als Starterverbindungen eingesetzten aromatischen Aminen enthalten.

Überraschenderweise wurde gefunden, dass durch den Einsatz von Aminkatalysatoren Polyole auf Basis von aromatischen Aminen, insbesondere TDA, erhalten werden, die eine geringe Viskosität aufweisen und nur Propylenoxid als Alkylenoxid enthalten.

Gegenstand der Erfindung ist demzufolge ein Verfahren zur Herstellung von Polyetheralkoholen durch Umsetzung von a) aromatischen Aminen mit b) Alkylenoxiden in Gegenwart c) eines Katalysators, dadurch gekennzeichnet, dass das Alkylenoxid b) zu mindestens 90 Gewichts-%, bezogen auf das Gewicht der Komponente b), Propylenoxid enthält und dass als Katalysator c) Imidazol eingesetzt wird.

Gegenstand der Erfindung sind auch die nach dem erfindungsgemäßen Verfahren hergestellten Polyetheralkohole sowie deren Verwendung zur Herstellung von Polyurethanen.

Als aromatische Amine a) können prinzipiell alle bekannten aromatischen Amine mit mindestens einer, vorzugsweise mindestens zwei und besonders bevorzugt mit zwei Aminogruppen eingesetzt werden. Bei den Aminogruppen handelt es sich üblicherweise um primäre Aminogruppen.

In einer bevorzugten Ausführungsform des erfindungsgemäßen Verfahrens sind die aromatischen Amine ausgewählt aus der Gruppen, enthaltend Anilin, TDA, MDA und p-MDA, besonders bevorzugt aus der Gruppe, enthaltend TDA und p-MDA. Insbesondere wird TDA verwendet.

Bei der Verwendung von TDA können alle Isomere, allein oder in beliebigen Gemischen miteinander eingesetzt werden. Insbesondere können 2,4-TDA, 2,6-TDA, Gemische aus 2,4-TDA und 2,6-TDA, 2,3-TDA, 3,4-TDA, Gemische aus 3,4-TDA und 2,3-TDA, sowie Gemische aus allen genannten Isomeren eingesetzt werden.

2,3-TDA und 3,4-TDA werden häufig auch als ortho-TDA oder als vicinales TDA (vic-TDA) bezeichnet. Beide Begriffe werden synonym verwendet. Das TDA kann ausschließlich vicinales TDA sein. In einer besonders bevorzugten Ausführungsform des erfindungsgemäßen Verfahrens besteht das TDA zu mindestens 90 Gewichts-% (Gew.-%), besonders bevorzugt zu mindestens 95 Gew.-% und insbesondere zu mindestens 98 Gew.-%, jeweils bezogen auf das Gewicht des TDA, aus vicinalem TDA bestehen.

Als Alkylenoxid b) wird vorzugsweise ausschließlich Propylenoxid verwendet. Es kann für einzelne Anwendungen vorteilhaft sein, eine geringe Menge an Ethylenoxid mitzuverwenden. Um die oben geschilderten Nachteile zu vermeiden, sollte der Anteil an Ethylenoxid 10 Gew.-% nicht überschreiten. Vorzugsweise liegt der Gehalt an Ethylenoxid bei dieser Ausführungsform zwischen größer Null und 10 Gew.-%, besonders bevorzugt zwischen größer Null und 5 Gew.-% und insbesondere zwischen größer Null und 2 Gew.-%, jeweils bezogen auf das Gewicht der Alkylenoxide b).

Falls Ethylenoxid eingesetzt wird, kann dieses als Block oder als Mischung mit Propylenoxid angelagert werden. Bei der Anlagerung als Block erfolgt die Anlagerung vorzugsweise unkatalysiert am Reaktionsbeginn. Die Anlagerung von Gemischen kann auch über die gesamte Umsetzung erfolgen.

Als Katalysator c) wird Imidazol eingesetzt.

In einer bevorzugten Ausführungsform der Erfindung ist der Katalysator c) Imidazol.

Der Katalysator c) wird dabei vorzugsweise in einer Menge von 0,1-1,0 Massen % bezogen auf die Summe des Gewichts der Komponenten a), b) und c), eingesetzt.

Die heterocyclischen Amin-Katalysatoren c), insbesondere die Imidazole, werden vorzugsweise in einer Menge von 0,01 bis 0,5 Massen % bezogen auf die Summe des Gewichts der Komponenten a), b) und c), eingesetzt.

Der Katalysator c) kann zu Beginn der Reaktion zugegeben werden. Dabei kann der Katalysator c) vor der Zugabe der Alkylenoxide oder, weniger bevorzugt, gleichzeitig mit dem Dosierstart der Alkylenoxide zugegeben werden.

In einer besonders bevorzugten Ausführungsform der Erfindung kann zu Beginn der Umsetzung die Anlagerung der Alkylenoxide unkatalysiert erfolgen und der Katalysator während der Umsetzung zugegeben werden. Bevorzugt erfolgt die Zugabe des Katalysators in dieser Ausführungsform nach der Dosierung von bis zu 3,4 mol Propylenoxid pro mol aromatisches Amin a) besonders bevorzugt von bis zu 3,0 mol Propylenoxid pro mol aromatisches Amin a).

Die Umsetzung der Amine mit dem Alkylenoxid erfolgt nach üblichem und beispielsweise in EP 318 784 beschriebenen Verfahren. Wie beschrieben, kann der Katalysator vor der Umsetzung, gleichzeitig mit dem Dosierstart der Alkylenoxide oder während der Umsetzung zugegeben werden. Vor der Dosierung der Alkylenoxide kann die Startermischung gestrippt werden, vorzugsweise bei einem Druck von 0,01-1 bar und einer Temperatur von 25-150°C.

Die als Startsubstanz eingesetzten aromatischen Amine a) können in einer bevorzugten Ausführungsform der Erfindung als einzige Startsubstanz eingesetzt werden.

In einer weiteren Ausführungsform der Erfindung können die aromatischen Amine in Kombination mit anderen Verbindungen mit mindestens zwei mit Isocyanatgruppen reaktiven Wasserstoffatomen ai) eingesetzt werden. Bei den Verbindungen ai) handelt es sich vorzugsweise um Alkohole oder Aminoalkohole mit einem Molgewicht von 40-400g/mol insbesondere 60-120 g/mol und 1 bis 8, vorzugsweise 2 bis 3 Hydroxylgruppen. Die Verbindungen ai) werden im folgenden auch als Costarter bezeichnet.

Vorzugsweise ist die Verbindung ai) ausgewählt aus der Gruppe, enthaltend Ethylenglykol, Diethylengykol, Propylenglykol, Dipropylenglykol, Glyzerin und Triethanolamin und deren Umsetzungsprodukten mit Alkylenoxiden.

Ein einer weiter Ausführungsform kann ai) Wasser sein.

Der Einsatz der Verbindungen ai) erfolgt vorzugsweise in einer Menge von 0,1 bis 20 Gew.-%, bevorzugt 0,1 bis 10 Gew.-%, insbesondere 0,1 bis 5 Gew.-%, jeweils bezogen auf die Summe des Gewichts der Komponenten a), b) und c).

Die Anlagerung der Alkylenoxide wird bevorzugt bei einer Temperatur zwischen 90 und 150 °C und einem Druck zwischen 0,1 bis 8 bar durchgeführt. An die Dosierung der Alkylenoxide schließt sich üblicherweise eine Nachreaktionsphase zur möglichst vollständigen Umsetzung der Alkylenoxide an. Der so erhaltene Rohpolyetheralkohol wird durch Destillation, vorzugsweise unter Vakuum, von nicht umgesetztem Alkylenoxid und leicht flüchtigen Verbindungen befreit.

Die nach dem erfindungsgemäßen Verfahren hergestellten Polyetheralkole weisen vorzugsweise eine Hydroxylzahl im Bereich zwischen 200 und 800 mg KOH/g, besonders bevorzugt 350 bis 550 mg KOH/g und insbesondere 350 bis 470 mgKOH/g auf.

Die nach dem erfindungsgemäßen Verfahren hergestellten Polyetheralkohole können zur Herstellung von Polyurethanen, insbesondere von Polyurethan-Hartschaumstoffen, eingesetzt werden.

Auf Grund ihrer niedrigen Viskosität weisen die unter Verwendung der erfindungsgemäßen Polyetheralkole hergestellten Polyurethansysteme eine gute Verarbeitbarkeit, insbesondere eine gute Fließfähigkeit, auf.

Sie sind gut mit Treibmitteln, insbesondere mit Treibmitteln auf Basis von Kohlenwasserstoffen, verträglich und weisen eine gute Lagerstabilität auf. Auch die Verträglichkeit mit der Isocyanat Komponente wird erhöht, was zu einer schnelleren Entformung führt.

Die Umsetzung des TDA mit den Alkylenoxiden ist praktisch quantitativ, es findet sich in den erfindungsgemäßen Polyetheralkoholen praktisch kein freies TDA mehr.

Wie bereits ausgeführt, können die erfindungsgemäßen Polyetheralkohole mit Polyisocyanaten zu Polyurethan-Hartschaumstoffen umgesetzt werden.

Zu den dafür eingesetzten Ausgangsstoffen ist im Einzelnen folgendes zu sagen:
Als organische Polyisocyanate kommen vorzugsweise aromatische mehrwertige Isocyanate in Betracht.

Im einzelnen seien beispielhaft genannt: 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'-und 2,4'-Diphenylmethan-diisocyanaten und bei der herstellung von Polyurethan-Hartschaumstoffen insbesondere Mischungen aus 4,4'-, 2,4'- und 2,2'-Diphenylmethan-diisocyanaten und Polyphenyl-polymethylen-polyisocyanaten (Roh-MDI).

Die erfindungsgemäßen Polyetheralkohole werden üblicherweise im Gemisch mit anderen Verbindungen mit mindestens zwei mit Isocyanatgruppen reaktiven Wasserstoffatomen eingesetzt.

Als Verbindungen mit mindestens zwei gegenüber Isocyanat reaktiven Wasserstoffatomen, die gemeinsam mit den erfindungsgemäß eingesetzten Polyetheralkoholen verwendet werden können, kommen insbesondere Polyetheralkohole und/oder Polyesteralkohole mit OH-Zahlen im Bereich von 100 bis 1200 mgKOH/g zum Einsatz.

Die gemeinsam mit den erfindungsgemäßen Polyetheralkoholen verwendeten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Polyetheralkoholen verwendeten Polyetheralkohole haben zumeist eine Funktionalität zwischen 2 und 8, insbesondere 3 bis 8.

Insbesondere kommen Polyetheralkohole, die nach bekannten Verfahren, beispielsweise durch anionische Polymerisation von Alkylenoxiden in Gegenwart von Katalysatoren, vorzugsweise Aminen und/oder Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 2, vorzugsweise 4 bis 8 Hydroxylgruppen oder mit mindestens zwei primären Aminogruppen im Molekül zum Einsatz.

Als Startmoleküle mit mindestens 2, vorzugsweise 3 bis 8 Hydroxylgruppen im Molekül werden vorzugsweise Trimethylolpropan, Glycerin, Pentaerythrit, Rizinusöl, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Die Polyetheralkohole besitzen eine Funktionalität von vorzugsweise 2 bis 8 und Hydroxylzahlen von vorzugsweise 100 mgKOH/g bis 1200 mgKOH/g und insbesondere 120 mgKOH/g bis 570 mgKOH/g.

Durch den Einsatz von difunktionellen Polyolen, beispielsweise Polyethylenglykolen und/oder Polypropylenglykolen, mit einem Molgewicht Mw im Bereich zwischen 500 bis 1500 g/mol in der Polyolkomponente kann die Viskosität der Polyolkomponente angepasst werden.

Zu den Verbindungen mit mindestens zwei gegenüber Isocyanat reaktiven Wasserstoffatomen gehören auch die gegebenenfalls mitverwendeten Kettenverlängerer und Vernetzer. Die Polyurethan-Hartschaumstoffe können ohne oder unter Mitverwendung von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400 g/mol, vorzugsweise 60 bis 300 g/mol.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Polyurethan-Schaumstoffe erfolgt üblicherweise in Anwesenheit von Treibmitteln. Als Treibmittel kann vorzugsweise Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die physikalischen Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane, wie, C3F8, C4F10, C5F12, C6F14, und C7F16. besonders bevorzugt sind Pentane, insbesondere Cyclopentan. Die genannten physikalischen Treibmittel können allein oder in beliebigen Kombinationen untereinander eingesetzt werden.

Die Herstellung der Polyurethane kann, falls erforderlich, in Anwesenheit von Katalysatoren, Flammschutzmitteln sowie üblichen Hilfs- und/oder Zusatzstoffen Hilfs- und/oder Zusatzstoffen durchgeführt werden.

Weitere Angaben zu eingesetzten Ausgangsverbindungen finden sich beispielsweise im Kunststoffhandbuch, Band 7 "Polyurethane", herausgegeben von Günter Oertel, Carl-Hanser-Verlag München, 3. Auflage, 1993.

Die Erfindung soll an den nachfolgenden Beispielen näher erläutert werden.

### Beispiel 1 (Nicht erfinderisch)

Ein 30 I Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80°C aufgeheizt und mehrmals inertisiert. 6,2 kg vicinales Toluylendiamin wurde in den Reaktor eingefüllt und der Rührer wurde mit 150 Umdrehungen/Minute in Betrieb genommen. Anschließend wurde die Temperatur auf 138°C erhöht und 8,26 kg Propylenoxid (2,8 mol Propylenoxid/mol vic-TDA) wurden dosiert. Nach einer Abreaktion von 2 h wurden die Temperatur auf 95°C abgesenkt und 220 g N,N'-Dimethylethanolamin zugegeben. Das Zwischenprodukt wurde mit weitern 12,7 kg Propylenoxid bei 95°C umgesetzt. Die Nachreaktion lief für 2 Stunden bei 95°C. Anschließend wurde für 20 Minuten unter Stickstoff gestrippt. Es wurden 26,1 kg Produkt mit folgenden Parametern erhalten.

Hydroxylzahl 390 mg KOH/g
Viskosität (25°C) 33500 mPas

### Beispiel 2

51,02 g vic-Toluylendiamin wurden in einen 300 ml Druckreaktor gegeben. Der Rührer wurde in Betrieb genommen und die Temperatur auf 138°C erhöht. Dann wurden 54,34 g Propylenoxid (2,24 mol Propylenoxid/mol vic-TDA) dosiert. Nach einer Abreaktion von 2 h wurde die Temperatur auf 95°C gesenkt und 0,66g Imidazol wurden zugegeben. Dann wurden weitere 112,86 g Propylenoxid dosiert. Die Nachreaktion lief für 3 Stunden bei 95°C. Anschließend wurde für 90 Minuten unter Vakuum evakuiert. Es wurden 210 g Produkt mit folgenden Parametern erhalten.

Hydroxylzahl 405 mg KOH/g
Viskosität (25°C) 17469 mPas

### Beispiel 3

51,00 g vic-Toluylendiamin wurden in den in Beispiel 2 verwendeten Reaktor gegeben. Der Rührer wurde in Betrieb genommen und die Temperatur auf 138°C erhöht. Dann wurden 54,34 g Propylenoxid (2,24 mol Propylenoxid/mol vic-TDA) dosiert. Nach einer Abreaktion von 2 h wurde die Temperatur auf 95°C gesenkt und 0,22 g Imidazol wurden zugegeben. Dann wurden weitere 112,86 g Propylenoxid dosiert. Die Nachreaktion lief für 3 Stunden bei 95°C. Anschließend wurde für 90 Minuten unter Vakuum evakuiert. Es wurden 206 g Produkt mit folgenden Parametern erhalten.

Hydroxylzahl 406 mg KOH/g
Viskosität (25°C) 30924 mPas

### Beispiel 4

51,00 g vic-Toluylendiamin wurden in den in Beispiel 2 verwendeten Reaktor gegeben. Der Rührer wurde in Betrieb genommen und die Temperatur auf 138°C erhöht. Dann wurden 61,14 g Propylenoxid (2,52 mol Propylenoxid/mol vic-TDA) dosiert. Nach einer Abreaktion von 2 h wurde die Temperatur auf 95°C gesenkt und 0,66 g Imidazol wurden zugegeben. Dann wurden weitere 106,06 g Propylenoxid dosiert. Die Nachreaktion lief für 3 Stunden bei 95°C. Anschließend wurde für 90 Minuten unter Vakuum evakuiert. Es wurden 208 g Produkt mit folgenden Parametern erhalten.

Hydroxylzahl 412 mg KOH/g
Viskosität (25°C) 24650 mPas

### Beispiel 5 (Nicht erfinderisch)

51,00 g vic-Toluylendiamin wurden in den in Beispiel 2 verwendeten Reaktor gegeben. Der Rührer wurde in Betrieb genommen und die Temperatur auf 138°C erhöht. Dann wurden 53,98 g Propylenoxid (2,24 mol Propylenoxid/pro mol vic-TDA) dosiert. Nach einer Abreaktion von 2 h wurde die Temperatur auf 95°C gesenkt und 1,81 g N,N'-Dimethylethanolamin wurden zugegeben. Dann wurden weitere 112,76 g Propylenoxid dosiert. Die Nachreaktion lief für 3 Stunden bei 95°C. Anschließend wurde für 90 Minuten unter Vakuum evakuiert. Es wurden 202 g Produkt mit folgenden Parametern erhalten.

Hydroxylzahl 414 mg KOH/g
Viskosität (25°C) 15147 mPas

### Beispiel 6 (Vergleich)

Der Beispiel 1 beschriebene Reaktor wurde auf 80°C aufgeheizt und mehrmals inertisiert. 5,65 kg vic-Toluylendiamin wurde in den Reaktor eingefüllt und der Rührer wurde in Betrieb genommen. Anschließend wurde die Temperatur auf 138°C erhöht und 7,50 kg Propylenoxid (2,8 mol Propylenoxid/mol vic-TDA) wurden dosiert. Nach einer Abreaktion von 2 h wurde die Temperatur auf 100°C abgesenkt und 91 g 48%ige wässrige KOH wurde zugegeben. Die Temperatur wurde auf 138°C erhöht und das Zwischenprodukt wurde mit weitern 11,74 kg Propylenoxid umgesetzt. Die Nachreaktion lief für 2 Stunden bei 138°C. Es wurde 20 Minuten mit Stickstoff gestrippt. Anschließend wurden 2,5 % Wasser zugegeben und mit Phosphorsäure neutralisiert. Das Wasser wurde im Vakuum abgestrippt und das Produkt wurde bei 80°C filtriert. Es wurden 24,6 kg Produkt mit folgenden Parametern erhalten.

Hydroxylzahl 371 mg KOH/g
Viskosität (25°C, 5 1/s) 42359 mPas

### Beispiel 7 (Vergleich)

55,91 g vic-Toluylendiamin wurden in den in Beispiel 2 verwendeten Reaktor gegeben. Der Rührer wurde in Betrieb genommen und die Temperatur auf 138°C erhöht. Dann wurden 64,84 g Propylenoxid (2,44 mol pro mol vic-TDA) dosiert. Nach einer Abreaktion von 2 h wurde die Temperatur auf 95°C gesenkt und 1,39 g wässrige Kalilauge (50%) wurden zugegeben. Die Temperatur wurde wieder auf 138°C erhöht und es wurden weitere 97,86 g Propylenoxid dosiert. Die Nachreaktion lief für 3 Stunden bei 138°C. Anschließend wurde für 90 Minuten unter Vakuum evakuiert. Es wurden 211 g Produkt mit folgenden Parametern erhalten

Hydroxylzahl 424 mg KOH/g
Viskosität (25°C, 5 1/s) 82345 mPas

### Viskositätsbestimmung:

Die Viskosität der Polyole wurde, wenn nicht anders angegeben, bei 25 °C gemäß DIN EN ISO 3219 mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt

### Messung der Hydroxylzahl

Die Hydroxylzahlen wurden nach der DIN 53240 bestimmt.

## Patentansprüche

1. Verfahren zur Herstellung von Polyetheralkoholen durch Umsetzung von a) aromatischen Aminen mit b) Alkylenoxiden in Gegenwart c) eines Katalysators, **dadurch gekennzeichnet, dass** das Alkylenoxid b) zu mindestens 90 Gewichts-%, bezogen auf das Gewicht der Komponente b), Propylenoxid enthält und dass als Katalysator c) ein Amin eingesetzt wird, **dadurch gekennzeichnet, dass** der Katalysator c) Imidazol ist.

2. Verfahren nach Anspruch 1, **dadurch gekennzeichnet, dass** das Amin a) ausgewählt ist aus der Gruppe, enthaltend Anilin, Toluylendiamin, Methylendianilin und Gemische von Methylendianilin mit seinen höherkernigen Kondensationsprodukten (p-MDA).

3. Verfahren nach Anspruch 1, **dadurch gekennzeichnet, dass** das Amin a) Toluylendiamin ist.

4. Verfahren nach Anspruch 1, **dadurch gekennzeichnet, dass** das Amin a) Toluylendiamin mit einem Gehalt von mindestens 90 Gewichts-% vicinalem Toluylendiamin, bezogen auf die Gesamtmenge an Toluylendiamin, ist.

5. Verfahren nach Anspruch 1, **dadurch gekennzeichnet dass** neben den Aminen a) eine weitere Verbindung ai) mit mindestens zwei mit isocyanatgruppen reaktiven Wasserstoffatomen mit den Alkylenoxiden umgesetzt wird.

6. Verfahren nach Anspruch 1, **dadurch gekennzeichnet, dass** das Alkylenoxid b) ausschließlich Propylenoxid enthält.

7. Polyetheralkohole, herstellbar nach einem der Ansprüche 1 bis 6.

8. Verwendung der Polyethewalkoholie nach Anspruch 7 zur Herstellung von Polyurethanen.

## Claims

1. A process for preparing polyether alcohols by reacting a) aromatic amines with b) alkylene oxides in the presence of c) a catalyst, wherein the alkylene oxide b) comprises at least 90% by weight, based on the weight of the component b), of propylene oxide and an amine is used as catalyst c), wherein the catalyst c) is imidazole.

2. The process according to claim 1, wherein the amine a) is selected from the group consisting of aniline, tolylenediamine, methylenedianiline and mixtures of methylenedianiline with condensation products thereof having more than two rings (p-MDA).

3. The process according to claim 1, wherein the amine a) is tolylenediamine.

4. The process according to claim 1, wherein the amine a) is tolylenediamine having a content of at least 90% by weight of vicinal tolylenediamine, based on the total amount of tolylenediamine.

5. The process according to claim 1, wherein, in addition to the amines a), a further compound ai) having at least two hydrogen atoms which are reactive toward isocyanate groups is reacted with the alkylene oxides.

6. The process according to claim 1, wherein the alkylene oxide b) comprises exclusively propylene oxide.

7. A polyether alcohol which can be prepared according to any of claims 1 to 6.

8. The use of the polyether alcohol according to claim 7 for preparing polyurethanes.

## Revendications

1. Procédé de fabrication de polyéther-alcools par mise en réaction de a) des amines aromatiques avec b) des oxydes d'alkylène en présence de c) un catalyseur, **caractérisé en ce que** l'oxyde d'alkylène b) contient au moins 90 % en poids, par rapport au poids du composant b), d'oxyde de propylène, et **en ce qu'**une amine est utilisée en tant que catalyseur c), **caractérisé en ce que** le catalyseur c) est un imidazole.

2. Procédé selon la revendication 1, **caractérisé en ce que** l'amine a) est choisie dans le groupe contenant l'aniline, la toluylènediamine, la méthylènedianiline et les mélanges de méthylènedianiline avec ses produits de condensation à nombre de noyaux plus élevé (p-MDA).

3. Procédé selon la revendication 1, **caractérisé en ce que** l'amine a) est la toluylènediamine.

4. Procédé selon la revendication 1, **caractérisé en ce que** l'amine a) est la toluylènediamine ayant une teneur d'au moins 90 % en poids en toluylènediamine vicinale, par rapport à la quantité totale de toluylènediamine.

5. Procédé selon la revendication 1, **caractérisé en ce qu'**en plus des amines a), un autre composé ai) contenant au moins deux atomes d'hydrogène réactifs avec les groupes isocyanate est mis en réaction avec les oxydes d'alkylène.

6. Procédé selon la revendication 1, **caractérisé en ce que** l'oxyde d'alkylène b) contient exclusivement de l'oxyde de propylène.

7. Polyéther-alcools, pouvant être fabriqués selon l'une quelconque des revendications 1 à 6.

8. Utilisation des polyéther-alcools selon la revendication 7 pour la fabrication de polyuréthanes.
